(19) Europäisches Patentamt
European Patent Office
Office européen des brevets

(11) **EP 1 596 219 A1**

(12) **EUROPEAN PATENT APPLICATION**

(43) Date of publication:
**16.11.2005 Bulletin 2005/46**

(51) Int Cl.⁷: **G01S 7/292**, G01S 7/487

(21) Application number: **04252786.1**

(22) Date of filing: **13.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicants:<br>• **Mitsubishi Electric Information Technology Centre Europe B.V.**<br>  **Guildford, Surrey GU2 5YD (GB)**<br>  Designated Contracting States:<br>  **GB**<br>• **MITSUBISHI DENKI KABUSHIKI KAISHA**<br>  **Tokyo 100 (JP)**<br>  Designated Contracting States:<br>  **AT BE BG CH CY CZ DE DK EE ES FI FR GR HU IE IT LU MC NL PL PT RO SE SI SK TR** | (72) Inventor: **Szajnowski, Wieslaw Jerzy**<br>  **Guildford Surrey GU1 1AR (GB)**<br><br>(74) Representative: **Burke, Steven David et al**<br>  **R.G.C. Jenkins & Co.**<br>  **26 Caxton Street**<br>  **London SW1H 0RJ (GB)** |

(54) **Signal processing circuit for time delay determination**

(57)     A time delay measurement apparatus for determining the delay between two signals comprises a variable delay circuit followed by a processing circuit. The processing circuit extracts events from one of the signals and uses it to sample the other signal. The samples are combined, e.g. by summing or averaging, to determine a value representing the degree of coincidence of the two signals. The operation is repeated for different values of the variable delay in order to determine the delay associated with the greatest degree of coincidence. The processing circuit preferably operates digitally by using gates to cause a counter to have its value changed in a first sense if binary transitions of the two signals occur substantially simultaneously and are of the same type, and in a second sense if the transitions occur substantially simultaneously and are of opposite types. Multiple processing circuits operating on different delays can be provided instead of using the variable delay circuit.

*Fig. 3*

EP 1 596 219 A1

## Description

BACKGROUND OF THE INVENTION

Field of the Invention

This invention relates to a circuit for processing signals, and is particularly but not exclusively applicable to circuits for use in apparatus for determining the relative time delay between two signals.

Description of the Prior Art

There are many circumstances in which there is a need to detect a noncooperative object of interest in some specified surveillance area. Such tasks can be performed by one or more suitable active sensors (in which the surveillance region of interest is illuminated by an interrogating energy waveform to obtain object-backscattered returns) or passive sensors (which respond to object-generated signals or object-influenced signals from separate sources). Such sensors can extract useful information by collaborative processing of signals reflected or emitted by that object.

For example, the delay between a transmitted signal and a reflection of the signal from an object can be measured to detect the presence and range of the object. The delay between the times at which two sensors receive a signal from an object can be measured to detect the bearing of the object. Multiple pairs of sensors, each pair detecting the object's bearing, can be used to determine the position of the object.

U.S. Pat. No. 6,539,320 discloses a robust method for determining the delay between two signals, in this case a primary reference signal and its time-delayed replica. In the following, the disclosed method will be referred to as "crosslation", and a system implementing the method will be referred to as a "crosslator". The contents of U.S. Pat. No. 6,539,320 are incorporated herein by reference. A crosslation technique involves using events (such as zero crossings) from one signal to sample the other signal. The events occur at irregular intervals, and are preferably at least substantially aperiodic. The samples are combined to derive a value which represents the extent to which the sampling coincides with features of the second signal corresponding to the events. By repeating this for different delays between the first and second signals, it is possible to discover the delay which gives rise to the value representing the greatest coincidence of events, i.e. the delay between the two signals.

In the example described in the above disclosure, a nondeterministic signal x(t) is subjected to an unknown delay to produce a signal y(t), and a reference version of the signal x(t) is examined to determine the time instants at which its level crosses zero, either with a positive slope (an *upcrossing)* or with a negative slope (a *downcrossing*). The time instants of these crossing events are used to obtain respective segments of the signal y(t), the segments having a predetermined duration. The segments corresponding to zero upcrossings are all summed, and the segments corresponding to zero downcrossings are all subtracted from the resulting sum. A representation of such segment combination is then examined to locate a feature in the form of an S-shaped odd function. In the following, the S-shaped odd function will be referred to as the *crosslation* function.

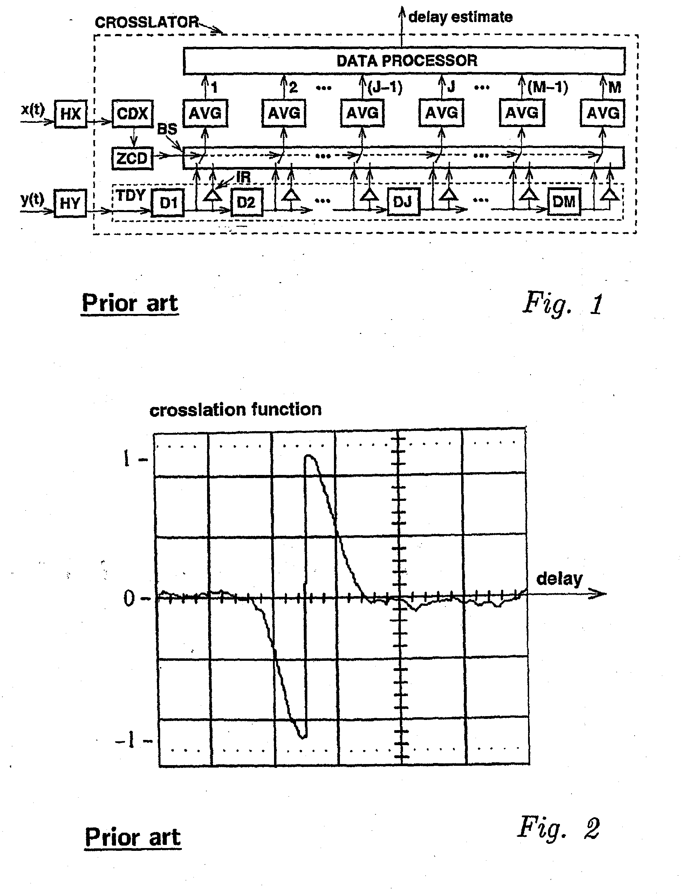

The position within the representation of a zero-crossing in the centre of the crosslation function represents the amount of the mutual delay between the two signals being processed. Fig. 2 shows an example of an S-shaped crosslation function obtained experimentally by processing a random binary waveform and its time-delayed replica.

Fig. 1 shows one possible example of exploiting the concept of crosslation to construct a system capable of determining the delay between a nondeterministic signal x(t) and its time-delayed replica y(t). The signal y(t) is the sum of noise $n_y(t)$ and the signal x(t) attenuated by the factor of $\alpha$ and delayed by $\tau_0$, hence

$$y(t) = \alpha x(t - \tau_0) + n_y(t)$$

As shown in Fig. 1, the signal y(t) is converted by a hard limiter HY into a corresponding binary bipolar waveform which is applied to the input of a tapped delay line TDY. The delay line TDY comprises a cascade of M identical unit-delay cells D1, D2, ... , DJ, ... , DM. Each cell provides a suitably delayed output signal and also its polarity-reversed replica supplied by inverter IR.

The parallel outputs of the tapped delay line TDY are connected through a bank of switches BS to M averaging or integrating units AVG that accumulate data supplied by the tapped delay line TDY. The switches, normally open, are closed when a suitable signal is applied to their common control input. The time interval during which the switches are closed should be sufficiently long so that each new incremental signal sample can be acquired with minimal loss.

The time instants, at which the switches are closed and new data supplied to the averaging units, are determined by a zero-crossing detector ZCD that detects the crossings of zero level of a binary waveform obtained from the reference signal x(t) processed by a hard limiter HX; the resulting binary waveform is then delayed by a constant-delay line CDX. The value of the constant delay is equal to or greater than the expected maximum value of time delay to be determined. It should be pointed out that the averaging units receive the incremental input values from the tapped delay line TDY in a non-uniform manner, at the time instants coinciding with zero crossings of the delayed reference signal x(t).

Each time a zero upcrossing occurs, there appears transiently at the inputs of the averaging units a replica of a respective segment of the binary waveform obtained from the signal y(t). Similarly, each time a zero downcrossing occurs, there appears transiently at the inputs of the averaging units a *reversed-polarity* replica of a respective segment of the binary waveform obtained from the signal y(t). The averaging units thus combine the two groups of these segments to produce a representation of a combined waveform, like that of Fig. 2. Each point on the waveform has a value on the horizontal axis which corresponds to a relative delay between the signals and a value on the vertical axis which is influenced by the number of times the signals have coincident zero-crossings of the same type for that relative delay.

The signals obtained at the outputs of the averaging units AVG are used by the data processor. The operations performed by the data processor are so defined and structured as to determine the location of the zero crossing situated between the two opposite-polarity main peaks exhibited by the resulting S-shaped crosslation function. The location of this zero crossing corresponds to the time delay between the signals x(t) and y(t). A set of suitable operations and their sequence can be constructed by anyone skilled in the art.

In order to simplify the structure of a crosslator system, instead of using both upcrossings and downcrossings, the reference version of a wideband nondeterministic signal x(t) can be examined to determine the time instants of zero upcrossings (or downcrossings) only. However, irrespective of the particular arrangement used, a crosslation-based technique always includes a step of determining the time instants at which a reference signal crosses a predetermined threshold. Those specific time instants are also referred to as *significant events.* In a hardware implementation of crosslation significant events define the time instants at which suitable trigger pulses are generated.

The crosslation techniques of U.S. Pat. No. 6,539,320 for time-delay determination are robust and particularly useful for processing non-Gaussian signals. It would be desirable to provide a way in which similar techniques can be implemented in a simple and inexpensive manner.

SUMMARY OF THE INVENTION

Aspects of the present invention are set out in the accompanying claims.

According to a further aspect of the invention, there is provided a circuit for comparing two signals in order to calculate a value which can be used as a measure of the degree to which the signals are coincident. There is also provided a variable delay circuit for delaying one of the signals by a variable amount. By operating the circuit in successive measurement cycles each of which uses a delay of different value, and comparing the values calculated by the circuit, it is possible to determine which delay value represents the greatest coincidence, and thereby determine the delay between the two signals.

The circuit which compares the two signals is arranged to derive from one of the signals events which occur at non-uniform intervals, and to use these events to sample the other signal. The samples are combined (e.g. summed or averaged) to derive the value used to represent the degree of coincidence.

By repeatedly using the same circuit with different variable delay times, it is possible to provide an estimate of the delay between the signals at significantly less cost than prior art arrangements.

According to another aspect of the invention, a signal processing circuit is operable to process two binary signals in such a way as to alter a count value each time the first and second signals have substantially coincident logic transitions, the count value being altered in a first sense if the transitions are of the same type, and in the second sense if the transitions are of opposite types. Such a circuit can thereby provide an output count value which is influenced by the number of times a transition of one signal occurs at the same time as a matching transition of the other signal, and thus represents the extent to which the two signals are coincident.

If one of the signals is delayed by a predetermined amount before processing, the count value can be used to represent the extent to which that delay matches the delay between the original signals. By having multiple processing circuits each operating on differently-delayed versions of one of the signals, or by using the same circuit repeatedly with different delays (as in the previously-mentioned aspect of the invention) it is possible to calculate which of a plurality of delays matches the delay between the two signals.

It has been found that many, and preferably all, the functions and operations performed in the previously-disclosed variants of crosslators by switches, zero-crossing detectors, averaging circuits and difference circuits can be implemented in an all-digital fashion using simple circuitry by using the techniques of this aspect of the invention.

BRIEF DESCRIPTION OF THE DRAWINGS

Arrangements embodying the invention will now be described by way of example with reference to the accompanying drawings, in which:

Fig. 1 shows an example of a crosslator used to determine the delay between two input signals.

Fig. 2 depicts an example of a crosslation function obtained experimentally by processing a random binary waveform and its time-shifted replica.

Fig. 3 is a block diagram of a parallel digital crosslator in accordance with the present invention.

Fig. 4(a) shows a logic circuit forming a cell of the crosslator of Fig. 3, and Figs. 4(b) and 4(c) are logic diagrams to explain the function of the circuit.

Fig. 5 is a block diagram of a serial digital crosslator in accordance with the present invention.

Fig. 6 is a block diagram of a serial analog crosslator in accordance with the present invention.

## DETAILED DESCRIPTION OF THE PREFERRED EMBODIMENTS

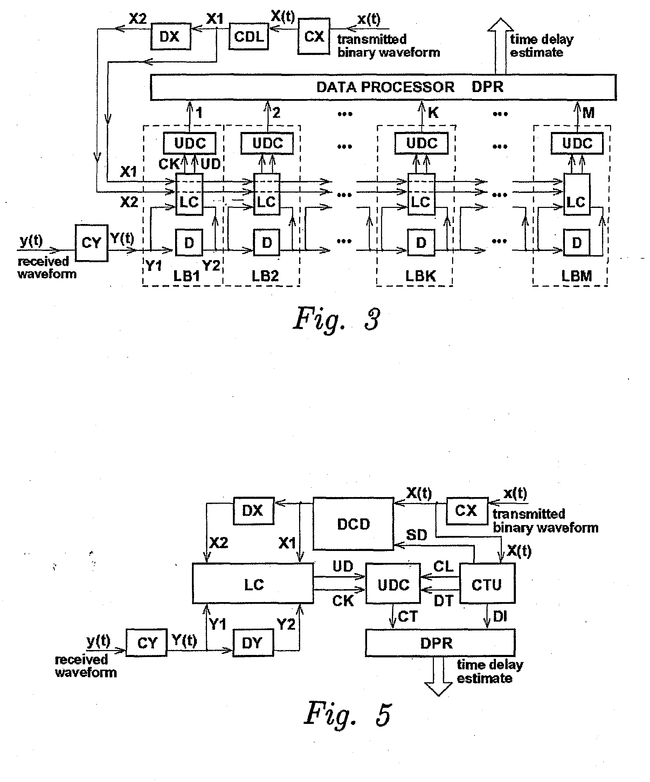

Fig. 3 is a block diagram of an apparatus capable of determining the delay $\tau_0$ between a primary signal x(t) and a replica y(t).

The transmitted waveform x(t) is converted by a logic-level converter CX into a corresponding binary representation X(t). Similarly, a received waveform y(t) is first converted into a binary waveform, and then into a corresponding binary representation Y(t) by a block CY, comprising a suitable hard limiter followed by a logic-level converter. As a result, either representation, X(t) or Y(t), may assume only two logic levels: H ('high') and L ('low').

The binary representation X(t) is delayed by a constant delay line CDL whose delay is equal to the maximum operational delay value. The delayed replica of X(t) is used as a reference waveform and examined to detect the time instants at which (logic) level transitions have occurred.

The binary representation Y(t) of the received signal y(t) is also examined to detect the time instants at which (logic) level transitions have occurred.

Each time instant when a level transition (up or down) observed in X(t) coincides with a level transition (up or down) observed in Y(t), is detected and counted.

These coincidences of level transitions are detected by M identical logic blocks, LB 1, LB2, ..., LBK, ..., LBM. Each of the logic blocks, LB1, LB2, ..., LBK, ..., LBM, consists of a unit-delay cell D, a combinatorial logic cell LC and a reversible (up/down) counter UDC. In the preferred embodiment, in order to enable the detection of transitions, each block receives both a signal X1 from the constant delay line CDL and a further signal X2 which has been subjected to a further delay by an auxiliary unit-delay circuit DX. Each block also receives a differently-delayed version Y1 of the signal Y(t) and uses its unit-delay cell D to derive a signal Y2 which is delayed by a unit amount relative to signal Y1.

For each occurring coincidence, both the respective transitions may be concordant (i.e. of the same kind, both up or both down), or discordant (i.e. of the opposite kind).

A reversible counter UDC in each of the M blocks, BL1, BL2, ..., BLK, ..., BLM, 'counts up', when both of the coinciding transitions are of the same type (both up or both down). The counter UDC 'counts down', if the coinciding transitions are of opposite types.

All the reversible counters UDC are cleared at the beginning of a measurement cycle, initiated by an external control unit (not shown), and the contents of the counters are transferred to a data processor DP when the cycle is terminated.

A data processor DPR compares all the M values supplied by the reversible counters UDC, and selects the largest value that has exceeded a predetermined detection threshold; the number of the block in which this maximum value has been registered is then used to determine the value of the unknown delay.

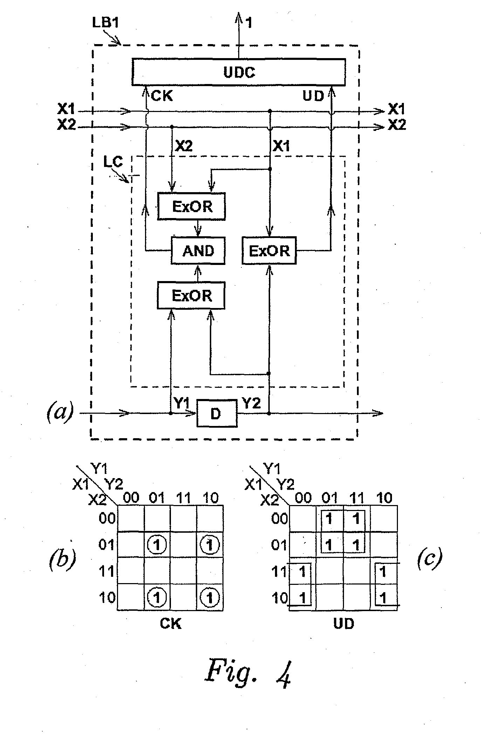

Fig. 4(a) depicts an example of a possible structure of one (LB 1, in this case) of the identical logic blocks, LB1, LB2, ..., LBK, ..., LBM, incorporating exclusive-OR gates ExOR and an AND gate AND. All input variables: X1, X2, Y1 and Y2 are logic variables, 0 or 1, corresponding to logic levels 'L' and 'H', respectively. As seen,

$$CK = (X1 \oplus X2) \cdot (Y1 \oplus Y2)$$

Thus, a transition in each signal is detected by a respective ExOR gate and the AND gate determines whether these transitions are occurring simultaneously.

Also

$$UD = X1 \oplus Y2$$

Thus, an ExOR gate determines whether the X1, Y2 signals are at the same levels (i.e. whether any concurrent transitions are concordant).

The resulting logic values of these signals CK, UD for different values of X1, X2, Y1 and Y2 are shown in Figs. 4(b) and (c).

The reversible counter UDC counts up when a pulse appears at input CK and UD = 1 (i.e. when a concordant transition occurs); if UD = 0 (i.e. when a discordant transition occurs), the counter counts down when a pulse occurs at input CK.

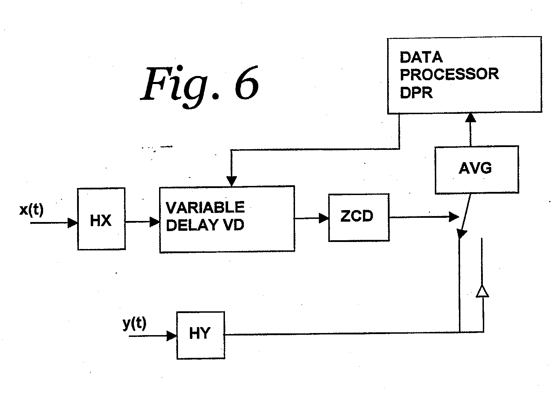

A significant simplification of the structure of the apparatus of Fig. 3 can be achieved when the bank of M logic blocks is replaced by a single logic block combined with a digitally-controlled variable delay line and a suitable control/timing unit. A block diagram of such an apparatus, referred to herein as a serial digital crosslator, is shown in Fig. 5.

The system comprises the following blocks:

- a logic-level converter CX
- a digitally-controlled delay line DCD
- two unit-delay units, DX and DY
- a block CY, including a hard limiter followed by a logic-level converter
- a combinational logic cell LC

- a reversible counter UDC
- a control/timing unit CTU
- a data processor DPR.

Each measurement cycle is initiated by the control/timing unit CTU that resets the reversible counter UDC, via input CL, and sets a required delay by supplying a suitable control signal SD to the digitally-controlled delay line DCD; the information about the delay used is also sent to input DI of the data processor DPR.

The duration of each measurement cycle is determined by the time interval needed to observe a predetermined number NT of transitions in the transmitted waveform X(t); for this purpose, the unit CTU employs an internal auxiliary counter. The state of the reversible counter UDC increases or decreases, depending on whether concordant or discordant pairs of transitions have been observed. When the number NT has been reached, the unit CTU initiates the transfer of the counter UDC contents to the data processor DPR by sending a suitable control signal DT. At this stage, the measurement cycle has been completed. A next measurement cycle begins: a new value of delay is set in the delay line DCD, and the counter UDC is cleared.

The entire process is repeated for different delay values, selected from a predetermined range of delays. When all the delay values have been used, the data processor DPR determines the delay which corresponds to the largest number of concordant pairs of transitions registered by the counter UDC; this specific delay provides an estimate of the unknown delay.

Various modifications are possible. Although in this embodiment the duration of each cycle is dependent upon the number of transitions in one of the waveforms (X(t)), it would be possible instead to have a fixed duration, so long as the signals were of such a nature that sufficient transitions can be expected within this duration. Another possibility would be to control the cycle duration in accordance with the number of detected upcrossings (or downcrossings) only.

Figure 6 shows an analog version of the arrangement of Figure 5, and includes components similar to those in Figure 1, like parts bearing like reference symbols. In Figure 6, the signal y(t) is converted by a hard limiter HY into a corresponding binary bipolar waveform. This waveform and its polarity-reversed replica are supplied to an averaging or integrating unit AVG via a switch. The switch is normally open but supplies the output or the polarity-reversed replica to unit AVG when a zero-crossing detector ZCD detects an upcrossing or a downcrossing in the signal x(t), which has been processed by a hard limiter HX and then delayed by a variable delay line VD. The output of unit AVG is delivered to a data processor DPR. After a predetermined interval (or when a predetermined condition is met, such as the number of zero-crossings reaching a predetermined value), the data processor DPR sets the delay caused by the variable delay line VD to a different value and then repeats the operation. By comparing the different values reached by the unit AVG, the data processor DPR can determine the value of delay between the signals x(t) and y(t). The variable delay line VD could instead be placed in the path of the signal y(t), the signal x(t) being subjected to a suitable constant delay. In another modification, the hard limiter HY is omitted and the unit AVG operates on the analog values of the signal y(t).

The arrangements described above detect events by sensing zero upcrossings and downcrossings. It would instead by possible to detect events occurring at other levels (upcrossings and/or downcrossings).

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

**Claims**

1. A circuit for processing first and second binary signals, the circuit being operable to detect substantially coincident transitions of logic levels in the first and second signals, and to alter a count in a first sense if the transitions are of the same type and in a second, opposite sense if the transitions are of opposite types.

2. A circuit as claimed in claim 1, including a first exclusive-OR gate responsive to the first and second binary signals, a second exclusive-OR gate responsive to delayed versions of the first and second binary signals, and an AND gate responsive to the outputs of the first and second exclusive-OR gates for providing an output causing said count to be altered.

3. A circuit as claimed in claim 1 or claim 2, including a count-controlling exclusive-OR gate responsive to the first and second binary signals for providing an output controlling the count sense.

4. A method of determining the delay between two signals, the method involving delaying one of the signals by a predetermined delay amount, using a circuit as claimed in any preceding claim to process the signals, determining the value of the altered count, repeating the processing operation for different values of the delay, and determining from the altered count values the delay amount for which the signals are substantially coincident.

**5.** A method as claimed in claim 4, wherein the processing operation is repeated by using the same circuit in succession with different values of the delay.

**6.** A method as claimed in claim 4, wherein the operation is repeated using respective different processing circuits, each as claimed in any one of claims 1 to 3, for different delay values.

**7.** A method of detecting an object, the method comprising obtaining two signals, at least one of which may have been influenced by the presence of an object, determining the delay between the signals using a method as claimed in any one of claims 4 to 6, and determining whether an object is present in dependence on the result of the determination.

**8.** A method as claimed in claim 7, including the step of calculating the range of the object from the determined delay value.

**9.** A method as claimed in claim 7, including the step of determining the bearing of the object from the determined delay value.

**10.** A time delay detection apparatus operable to perform a method as claimed in any one of claims 4 to 6.

**11.** A time delay detection apparatus, the apparatus comprising a plurality of circuits each as claimed in any one of claims 1 to 3, means for feeding each of said circuits with (a) said first binary signal and (b) respective differently-delayed versions of the second binary signal, and means for comparing the counts reached by the respective processing circuits in order to determine that circuit which receives the most closely-coincident versions of the first and second signals.

**12.** Apparatus as claimed in claim 11, including means for feeding each of said circuits with a first version of the first binary signal and a second version of the first binary signal, the second version of the first binary signal being delayed by a predetermined amount with respect to the first version of the first binary signal.

**13.** A time delay detection apparatus for detecting the delay between signals, the apparatus comprising a variable delay circuit for delaying the first signal by a predetermined alterable amount, means responsive to the delayed first signal and to the second signal for deriving events from one said signal which are spaced apart by non-uniform intervals and using the events to trigger the sampling of the other signal, means for combining the samples to obtain a value which is influenced by the number of times a sampling has substantially coincided with parts of the sampled signal which correspond with respective events, altering the predetermined delay and repeating the deriving and sampling operations to obtain at least one further value, and comparing the values in order to select the delay associated with the greatest degree of coincidence.

**14.** Object detection apparatus comprising apparatus for measuring the delay between a transmitted signal and its reflection, the apparatus being in accordance with any one of claims 10 to 13, and means for deriving from the detected delay an indication of the distance of an object from which the transmitted signal is reflected.

**15.** Object bearing detection apparatus comprising two sensors each arranged to detect signals from an object, apparatus as claimed in any one of claims 10 to 12 for determining the delay between these signals, and means for calculating, from said delay, the bearing of said object.

**16.** Object locating apparatus comprising at least two object bearing detection apparatuses as claimed in claim 15.

**Prior art**

*Fig. 1*

crosslation function

**Prior art**

*Fig. 2*

Fig. 3

Fig. 5

Fig. 4

# Fig. 6

```
                                        ┌──────────────┐
                                        │ DATA         │
                                        │ PROCESSOR    │
                                        │ DPR          │
                                        └──────────────┘
                                                ▲
                                        ┌────────────┐
                                        │    AVG     │
                                        └────────────┘
        ┌──────┐   ┌──────────────┐   ┌──────────┐
x(t) ──▶│  HX  │──▶│ VARIABLE     │──▶│   ZCD    │──▶
        └──────┘   │ DELAY VD     │   └──────────┘
                   └──────────────┘

        ┌──────┐
y(t) ──▶│  HY  │──────────────────────────────▶
        └──────┘
```

**European Patent Office**

**EUROPEAN SEARCH REPORT**

Application Number

EP 04 25 2786

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 694 643 A (SMITH DONALD A) 26 September 1972 (1972-09-26) | 1,2,4 | G01S7/292 G01S7/487 |
| Y | * column 3, line 7 - column 5, line 32; figures 2,4 * | 5 | |
| X | US 3 626 298 A (LINDSEY WILLIAM C ET AL) 7 December 1971 (1971-12-07) * column 2, line 45 - column 6, line 69; figures 1,5,6 * | 1 | |
| Y | US 2002/131035 A1 (WATANABE TAKAMOTO ET AL) 19 September 2002 (2002-09-19) * paragraphs [0015] - [0019], [0071] - [0074]; figure 4 * | 5 | |
| A | EP 1 378 854 A (MITSUBISHI ELECTRIC INF TECH) 7 January 2004 (2004-01-07) * paragraphs [0037] - [0044]; figures 7,11 * | 1-16 | |
| A,D | US 6 539 320 B1 (RATLIFF PAUL A ET AL) 25 March 2003 (2003-03-25) * the whole document * | 1-16 | TECHNICAL FIELDS SEARCHED (Int.Cl.7) G01S G04F |

The present search report has been drawn up for all claims

| Place of search | Date of completion of the search | Examiner |
|---|---|---|
| Munich | 22 September 2004 | Mercier, F |

EPO FORM 1503 03.82 (P04C01)

**ANNEX TO THE EUROPEAN SEARCH REPORT
ON EUROPEAN PATENT APPLICATION NO.**

EP 04 25 2786

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2004

| Patent document cited in search report | | Publication date | Patent family member(s) | | Publication date |
|---|---|---|---|---|---|
| US 3694643 | A | 26-09-1972 | NONE | | |
| US 3626298 | A | 07-12-1971 | NONE | | |
| US 2002131035 | A1 | 19-09-2002 | JP | 2002267752 A | 18-09-2002 |
| | | | JP | 2002271181 A | 20-09-2002 |
| | | | DE | 10210000 A1 | 31-10-2002 |
| | | | US | 2003197498 A1 | 23-10-2003 |
| EP 1378854 | A | 07-01-2004 | EP | 1378854 A1 | 07-01-2004 |
| | | | JP | 2004163889 A | 10-06-2004 |
| | | | US | 2004059517 A1 | 25-03-2004 |
| US 6539320 | B1 | 25-03-2003 | AU | 1882400 A | 31-07-2000 |
| | | | EP | 1145084 A1 | 17-10-2001 |
| | | | WO | 0039643 A1 | 06-07-2000 |
| | | | GB | 2345149 A ,B | 28-06-2000 |
| | | | JP | 2002533732 T | 08-10-2002 |

EPO FORM P0459

For more details about this annex : see Official Journal of the European Patent Office, No. 12/82